# EUROPÄISCHE PATENTANMELDUNG

(11) **EP 2 159 381 A1**
(43) Veröffentlichungstag der Anmeldung: **03.03.2010**
(21) Anmeldenummer: 08015129.3
(22) Anmeldetag: 27.08.2008
(51) Int. Cl.: F01D 9/04, F01D 11/18, F01D 25/12, F01D 25/24

(54) **Turbinenleitschaufelträger für eine Gasturbine**

(71) Anmelder: Siemens Aktiengesellschaft, 80333 München (DE)
(72) Erfinder: Benkler, Francois, Dr., 40880 Ratingen (DE); Böttcher, Andreas, Dr., 40880 Ratingen (DE); Grundei, Daniel, 46049 Oberhausen (DE); Lohse, Uwe, 42899 Remscheid (DE); Maldfeld, Ekkehard, Dr., 45479 Mühlheim an der Ruhr (DE); Milazar, Mirko, 46049 Oberhausen (DE); Schneider, Oliver, Dr., 46487 Wesel (DE); Sheng, Shilun, Dr., 46149 Oberhausen (DE)

(57) **Zusammenfassung**

Die Erfindung betrifft einen Turbinenleitschaufelträger (10) für eine axial durchströmte Gasturbine umfassend eine rohrförmige Wand (20), mit einem einströmseitigen Ende (16) sowie einem ausströmseitigen Ende (18) für ein im Innenraum (40) des Turbinenleitschaufelträgers (10) in einem Strömungspfad der Gasturbine strömendes Heißgas, wobei in der Wand (20) zumindest ein Kühlkanal (26) für ein Kühlmittel vorgesehen ist, welcher sich jeweils von einem Kühlmittel-Einlass (32) zu einem Kühlmittel-Auslass (36) erstreckt. Um den Turbinenleitschaufelträger (10) für besonders hohe Einsatztemperaturen auszugestalten, wird vorgeschlagen, dass zumindest einer der Einlässe (32) und einer der Auslässe (36) jeweils am ausströmseitigen Ende (18) des Turbinenleitschaufelträgers (10) angeordnet sind, wobei der dem jeweiligen Einlass (32) und Auslass (36) zugeordnete Kühlkanal (26) sich bis zum einströmseitigen Ende (16) des Turbinenleitschaufelträgers (10) erstreckt und dort in einen Umlenkbereich (34) übergeht, von wo aus er sich weiter zum ausströmseitigen Ende (18) erstreckt.

## Beschreibung

Die Erfindung betrifft einen Turbinenleitschaufelträger für eine Gasturbine, umfassend eine rohrförmige Wand mit einem einströmseitigen Ende und einem dem einströmseitigen Ende gegenüberliegenden ausströmseitigen Ende für ein im Innenraum des Turbinenleitschaufelträgers strömendes Heißgas.

Ein Turbinenleitschaufelträger der eingangs genannten Art für eine stationäre Gasturbine ist heutzutage prinzipiell aus zwei identischen halbrohrartige Trägerelementen gebildet, welche flanschartig miteinander verschraubt prinzipiell eine Rohrform bilden. An deren inneren Oberflächen sind entlang des Umfangs verlaufende Nuten zur Aufnahme und Befestigung von Leitschaufeln der Turbineneinheit der Gasturbine vorgesehen.

Die Turbineneinheit der Gasturbine weist zudem einen entlang der Axialerstreckung sich im Querschnitt vergrößernden Strömungspfad auf, wobei auch dessen Außendurchmesser sich dabei stetig vergrößert. In den Strömungspfad ragen die Schaufelblätter der Turbinenleitschaufeln hinein, welche am Turbinenleitschaufelträger innen befestigt sind. Aufgrund des sich in Axialrichtung vergrößernden Durchmessers des Strömungspfads ist auch der Turbinenleitschaufelträger einer solchen Gasturbine korrespondierend ausgebildet: mit einem in Strömungsrichtung sich im Mittel stetig vergrößernden Durchmesser. Es ist somit konisch ausgebildet. Bezogen auf das den Strömungspfad des Turbinenabschnitts durchströmende Heißgas weist ein Leitschaufelträger der eingangs genannten Art stets ein einströmseitiges Ende und ein ausströmseitiges Ende für das Heißgas auf. Das einströmseitige Ende des im Querschnitt ringförmigen Turbinenleitschaufelträgers weist dabei einen kleineren Radius auf als der Radius des ausströmseitigen Endes.

Am einströmseitigen Ende des Turbinenleitschaufelträgers wird das in der Brennkammer erzeugte Heißgas in den ringförmigen Strömungspfad der Gasturbine geführt, welcher sich entlang der Axialrichtung durch den Innenraum des Turbinenleitschaufelträgers erstreckt. Der Strömungspfad führt das eingespeiste Heißgas zum ausströmseitigen Ende des Turbinenleitschaufelträgers. Währenddessen entspannt sich das Heißgas im Strömungspfad arbeitsleistend an den Turbinenlaufschaufeln und gibt Wärme an seine Umgebung ab. Zudem wird die Temperatur des Heißgases durch die Zuführung von Kühlluft weiter verringert. Bekanntermaßen ergeben sich so höhere Eintrittstemperaturen als Austrittstemperaturen für das Heißgas.

Dies führt zu Materialtemperaturen im Turbinenleitschaufelträger, die am einströmseitigen Ende wesentlich höher sind als an dessen ausströmseitigen Ende, so dass sich in Axialrichtung des Turbinenleitschaufelträgers ein Temperaturgefälle einstellt, was zu unterschiedlichen thermischen Belastungen und unterschiedlichen Wärmedehnungen führt.

Durch allgemeine Bestrebungen zu weiter gesteigerten Turbineneintrittstemperaturen werden jedoch die Gehäusebauteile der Gasturbine und speziell der Turbinenleitschaufelträger thermisch und mechanisch weiter belastet. Auch das Temperaturgefälle wird dadurch vergrößert. Um eine ausreichende Lebensdauer des Turbinenleitschaufelträgers für eine Gasturbine mit weiter erhöhten Eintrittstemperaturen zu gewährleisten, kann es erforderlich sein, den Werkstoff, aus dem der Turbinenleitschaufelträger gefertigt ist, zu wechseln, da das Material den höheren Temperaturen dauerhaft standhalten muss. Üblicherweise sind temperaturfestere Werkstoffe jedoch wesentlich teurer als weniger wärmebeständigere konventionelle Werkstoffe.

Aufgabe der Erfindung ist daher die Bereitstellung eines Turbinenleitschaufelträgers für eine Gasturbine, welcher bei weiter erhöhten Temperaturbedingungen weiterhin aus einem vergleichweise preiswerten Material gefertigt sein kann.

Die der Erfindung zugrundeliegende Aufgabe wird durch einen Turbinenleitschaufelträger gemäß den Merkmalen des Anspruchs 1 gelöst.

Der Erfindung liegt die Erkenntnis zugrunde, dass die kritischen Stellen für die thermische Dehnung und auch für die Druckbelastung am vorderen Teil des Leitschaufelträgers, also am einströmseitigen Ende liegen. Zudem wurde erkannt, dass das zur Kühlung der Leitschaufeln der einer, beispielsweise der vierten Turbinenstufe verwendete Kühlmittel noch zuvor zur Kühlung des Turbinenleitschaufelträgers eingesetzt werden kann, ohne dadurch die Kühlung, Funktion und Lebensdauer der Leitschaufeln der betreffenden Turbinenstufe zu beeinträchtigen.

Zur Kühlung des Turbinenleitschaufelträgers ist erforderlich, dass in seiner Wand, welche den Turbinenleitschaufelträger zumindest teilweise formt, zumindest ein Kühlkanal für ein Kühlmittel vorgesehen ist, welcher sich jeweils von einem Kühlmittel-Einlass zu einem Kühlmittel-Auslass erstreckt.

Erfindungsgemäß ist daher vorgesehen, dass der den Einlass mit dem Auslass verbindende Kühlkanal sich in Axialrichtung vom Einlass bis zu einem am einströmseitigen Ende des Turbinenleitschaufelträgers angeordneten Umlenkbereich und von dort aus sich weiter zum Auslass erstreckt.

Die Erfindung besteht somit insbesondere darin, dass dasjenige Kühlmittel, welches üblicherweise zur Kühlung der im stromabwärtigen Teil des Turbinenleitschaufelträgers angeordneten Leitschaufeln verwendet wird, auch zur Kühlung des wärmsten Bereichs des Turbinenleitschaufelträger - nämlich des einströmseitigen Endes - genutzt wird. Vorzugsweise wird das zur Kühlung der Turbinenleitschaufel der vierten Turbinenstufe vorgesehene Kühlmittel zuerst durch im Turbinenleitschaufelträger angeordnete Kühlkanäle geführt, um dessen einströmseitigen Bereich, in dem die höchste Temperaturbelastung auftritt, zu kühlen. Nach der Kühlung des einströmseitigen Bereichs des Turbinenleitschaufelträgers wird das Kühlmittel wieder zurück zum ausströmseitigen Ende des Turbinenleitschaufelträgers geführt. Von dort wird es dann nach innen zu einer Vorkammer geführt, welche im Innenraum zwischen innerer Oberfläche des Turbinenleitschaufelträgers und den dort befestigten Leitschaufeln angeordnet ist. Anschließend kann das Kühlmittel in die Leitschaufeln selbst einströmen und diese kühlen. Das Kühlmittel kann alternativ oder zusätzlich auch zum Sperren der dort vorhandenen Spalte verwendet werden. Da die erforderliche Kühlung der Turbinenleitschaufeln der hinteren Stufen weniger aufwändig ist als bei vorderen Leitschaufeln, kann eine gewisse Temperaturerhöhung des Kühlmittels ohne wesentliche Änderung der Turbinenleitschaufelkonstruktion problemlos akzeptiert werden. Erfindungsgemäß kann aber auch das zur Kühlung der Leitschaufeln der zweiten oder dritten Turbinenstufe vorgesehene Kühlmittel - bezogen auf die Heißgas-Strömungsrichtung - stromauf zur Kühlung des Leitschaufelträgers durch die Kühlkanäle geleitet werden.

Durch die Kühlung des Turbinenleitschaufelträgers am einströmseitigen Ende kann dort die thermische Belastung verringert werden. Zudem wird durch den Abtransport der Wärmeenergie mit Hilfe des Kühlmittels zum ausströmseitigen Ende des Turbinenleitschaufelträgers dieses Ende zumindest geringfügig beheizt. Dies erhöht zwar die bisher geringere thermische Belastung am ausstromseitigen Ende, jedoch bleibt diese weiterhin insgesamt innerhalb der zulässigen thermischen Belastung. Insbesondere hierdurch ergibt sich eine Vergleichmäßigung der Temperaturbelastung im Turbinenleitschaufelträger entlang seiner axialen Erstreckung. Das Temperaturgefälle wird verringert.

Durch die geschickte Temperierung des Turbinenleitschaufelträgers kann auf die Verwendung eines hochtemperaturfesten Werkstoffs verzichtet werden. Dadurch ist eine bessere Ausnutzung des Werkstoffs möglich, was die Kosten reduziert.

Ein weiterer Vorteil der voranbeschriebenen aktiven Temperierung kann auch im transienten An- und Abfahrbetrieb auftreten, nämlich dann, wenn auf die Systemdynamik der Gasturbine mittels einer gesteuerten Kühlung derart eingewirkt wird, dass eine Spaltoptimierung während dieser Betriebsphase erreicht wird. Gleichzeitig kann das transiente Verhalten der Gasturbine durch ein schnelleres und gleichmäßigeres Aufwärmen und Abkühlen des Turbinenleitschaufelträgers verbessert werden.

Für bestehende Gasturbinen ist allein die Konstruktion des Turbinenleitschaufelträgers zu ändern, um diesen für höhere Temperaturen auszugestalten.

Vorteilhafte Ausgestaltungen sind in den Unteransprüchen angegeben.

Gemäß einer ersten vorteilhaften Ausgestaltung ist entlang des Umfangs der Wand verteilt eine Vielzahl von erfindungsgemäßen Kühlkanälen vorgesehen. Zweckmäßigerweise sind deren Einlässe an einer äußeren Oberfläche der Wand angeordnet, wobei üblicherweise die Zuführung von Kühlmittel durch den Turbinenleitschaufelträger von Außen erfolgt, so dass die Anordnung des Kühlluft-Einlasses an der äußeren Oberfläche der im Querschnitt rohrförmigen Wand des Turbinenleitschaufelträgers zweckmäßig ist.

Da das den Turbinenleitschaufelträger durchströmende Kühlmittel in der Regel zur Kühlung von innerhalb des Turbinenleitschaufelträgers angeordneten Turbinenleitschaufeln und/oder zur Sperrung von dort vorhandenen Spalten verwendet wird, ist es von Vorteil, wenn die Auslässe an einer inneren Oberfläche der Wand als Bohrung angeordnet sind. Insbesondere hierdurch ist eine einfache Ableitung des Kühlmittels zum weiteren Verwendungsort möglich.

Eine besonders effiziente Wärmeübertragung kann erreicht werden, wenn an zumindest einer Kühlkanalwand Turbulatoren angeordnet sind, welche die im Kühlkanal strömende Kühlluft weiter durchmischt.

Bevorzugt ist in einer äußeren Oberfläche der Wand des Turbinenleitschaufelträgers für jeden Kühlkanal eine Nut vorgesehen, welche zur Bildung des betreffenden Kühlkanals durch eine Abdeckung größtenteils verschlossen ist. Sofern an der Abdeckung nicht auch der Einlass für das Kühlmittel vorgesehen ist, kann durch die Abdeckung der gesamte Kühlkanal verschlossen sein.

Die sich vom ausströmseitigen Ende bis zum einströmseitigen Ende des Turbinenleitschaufelträgers und wieder zurück erstreckenden Kühlkanäle können beim Abguss in die Außenkontur des einstückig gegossenen Turbinenleitschaufelträgers mit eingeformt werden. Diese mäanderartige Form der Kanäle ist somit dann vergleichsweise einfach und kostengünstig herstellbar.

Vorzugsweise werden dann die Kanäle durch Abdeckungen verschlossen, abgesehen von den Einlässen. Die Abdeckungen werden dazu an den Turbinenleitschaufelträger gasdicht geschweißt. Zweckmäßigerweise ist dabei die Abdeckung als Deckblech ausgebildet. Soweit erforderlich, können diese blechartigen Abdeckungen einen Versorgungsanschluss tragen, welche dann den Einlass für das Kühlmittel in den Kühlkanal bilden.

Die Erfindung kann insbesondere bei konisch ausgebildeten Turbinenleitschaufelträgern verwendet werden, welche aus zwei halbrohrartigen Leitschaufelträgerelementen gebildet sind, die ihrerseits flanschartig miteinander verschraubt sind. Diese Aufteilung in zwei gleiche Leitschaufelträgerelemente ist insbesondere für stationäre Gasturbinen von Vorteil, welche in der Regel eine Teilungsebene aufweisen, die parallel zur Horizontalebene verläuft.

Gemäß einer weiteren vorteilhaften Ausgestaltung der Erfindung ist die innere Oberfläche des Turbinenleitschaufelträgers derart ausgebildet, dass daran in einem Kranz angeordnete Leitschaufeln einer Turbineneinheit der Gasturbine befestigbar sind. Zweckmäßigerweise erstrecken sich an der inneren Oberfläche in Umfangsrichtung Nuten, in die die Leitschaufeln der Turbine eingehakt bzw. eingeschoben werden können.

Die Erfindung wird anhand einer Zeichnung erläutert, wobei sich weitere Merkmale und weitere Vorteile aus der Beschreibung ergeben. Es zeigen:
- FIG 1: eine perspektivische schematische Ansicht eines erfindungsgemäßen Turbinenleitschaufelträgers für eine stationäre Gasturbine,
- FIG 2: den Längsschnitt durch den erfindungsgemäßen Turbinenleitschaufelträger gemäß FIG 1 entlang der Schnittlinie II-II und
- FIG 3: einen Längsschnitt durch den erfindungsgemäßen Turbinenleitschaufelträger gemäß FIG 1 entlang der Schnittlinie III-III.

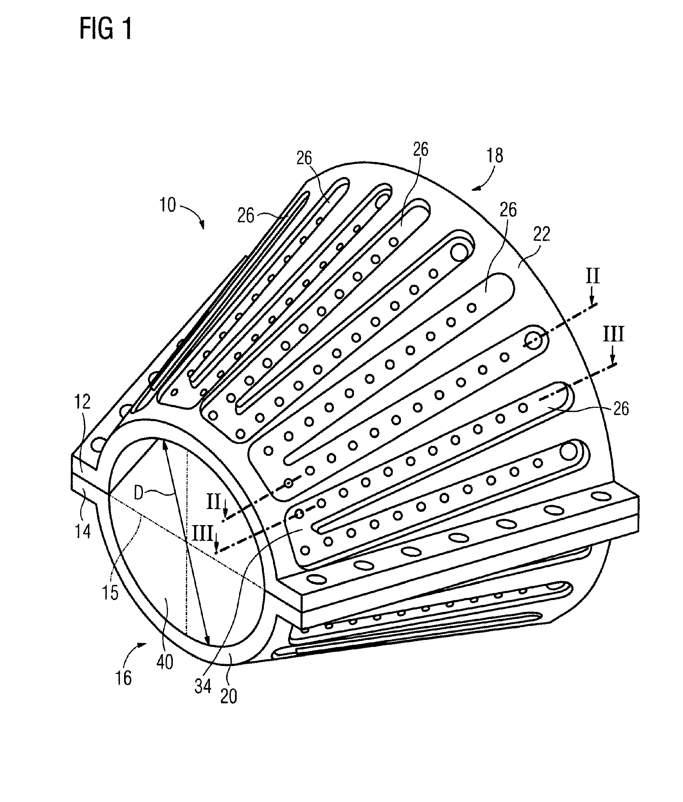

FIG 1 zeigt in perspektivischer schematischer Darstellung einen Turbinenleitschaufelträger 10 für eine stationäre, axial durchströmte Gasturbine. Für die Erfindung nicht relevante Merkmale des Turbinenleitschaufelträgers 10 sind in den Figuren nicht dargestellt. Der Turbinenleitschaufelträger 10 ist aus zwei halbrohrartigen Leitschaufelträgerelementen 12, 14 gebildet, wobei das Leitschaufelträgerelement 12 die obere Hälfte des Turbinenleitschaufelträgers 10 bildet und das Leitschaufelträgerelement 14 dessen untere Hälfte.

Die Leitschaufelträgerelemente 12, 14 liegen in einer Teilungsebene 15 flanschartig aneinander.

Der Turbinenleitschaufelträger 10 weist eine axiale Erstreckung auf, wobei er entlang dieser Erstreckung konisch ausgebildet ist. Demgemäß weist der rohrartige Turbinenleitschaufelträger 10 ein erstes Ende 16 sowie ein dem ersten Ende 16 gegenüberliegendes zweites Ende 18 auf. Der innere Durchmesser D des ersten Endes 16 ist dabei wesentlich kleiner als der innere Durchmesser des zweiten Endes 18. Gleiches gilt für die äußeren Durchmesser.

Verwendet in einer stationären Gasturbine ist der Turbinenleitschaufelträger 10 derartig in einem Druckmantel der Gasturbine angeordnet, dass das erste Ende 16 dem Auslass einer nicht weiter dargestellten Brennkammer gegenüberliegt. Das zweite Ende 18 des Turbinenleitschaufelträgers 10 liegt dann einem nicht dargestellten Ausgangsdiffusor der Gasturbine gegenüber.

In einem vom Turbinenleitschaufelträger 10 umfassten Innenraum 40 erstreckt sich in Axialrichtung ein Strömungspfad, welcher radial außen sowie radial innen von geeigneten Elementen, d.h. Plattformen von Turbinenschaufeln und Führungsringen begrenzt wird. Der Klarheit halber sind diese Elemente in FIG 1 nicht dargestellt, ebenso wenig wie der innerhalb des Turbinenleitschaufelträgers 10 im Querschnitt ringförmig ausgestaltete Strömungspfad für das in der Brennkammer erzeugte Heißgas. Bezogen auf das Heißgas und dessen Strömungsrichtung ist das erste Ende 16 des Turbinenleitschaufelträgers 10 das einströmseitige Ende 16 und das zweite Ende 18 das ausströmseitige Ende 18.

Der Turbinenleitschaufelträger 10 wird schematisch von einer rohrförmigen Wand 20 gebildet. An deren äußerer Oberfläche 22, d.h. an der äußeren Mantelfläche der beiden halbrohrförmigen Leitschaufelträgerelemente 12, 14, sind mehrere Kühlkanäle 26 angeordnet, welche entlang des Umfangs verteilt sind.

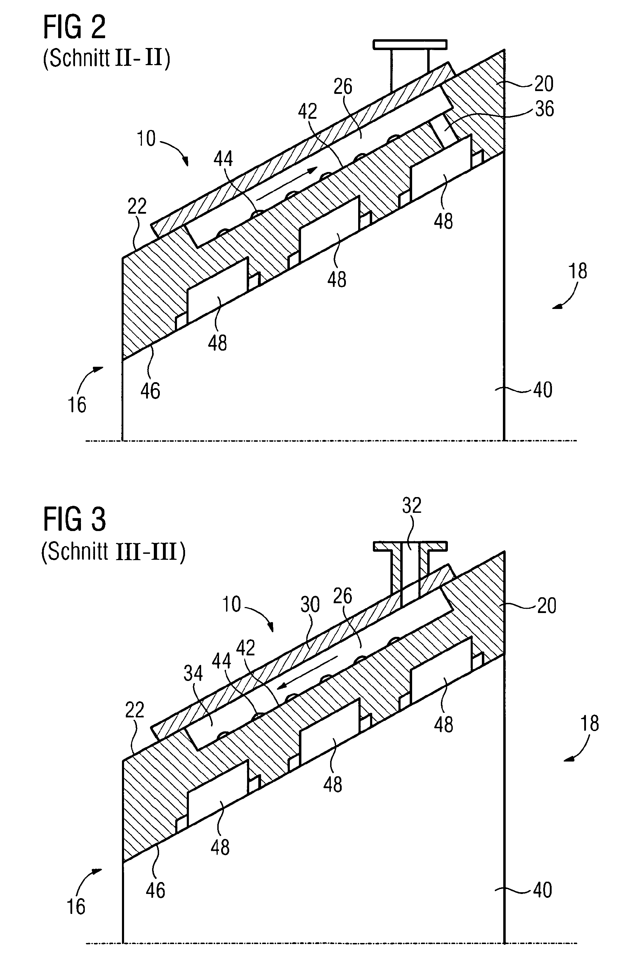

Die Darstellung gemäß FIG 1 zeigt die in der Wand 20 angeordneten Kühlkanäle 26, ohne die ansonsten oberhalb der Kühlkanäle 26 angeordneten Abdeckungen. Jeder der Kühlkanäle 26 weist eine U-förmige Erstreckung auf: sie erstrecken sich von einem Kühlmittel-Einlass 32 (FIG 3) zum davon stromauf gelegenen einströmseitigen Ende 16 des Turbinenleitschaufelträgers 10. Dort geht jeder Kühlkanal 26 in einen Umlenkbereich 34 über, von dem aus der Kühlkanal 26 sich weiter bis zum Auslass 36 zurück erstreckt (FIG 2). Im dargestellten Ausführungsbeispiel sind der Einlass 32 und der Auslass 36 beide am ausströmseitigen Ende 18, also im Bereich der hintersten Turbinenstufe angeordnet. Einlass 32 und Auslass 36 könnten aber auch im Bereich der mittleren Turbinestufen angeordnet sein.

FIG 3 zeigt den Schnitt III-III durch den Turbinenleitschaufelträger 10 aus FIG 1. Die in FIG 1 nicht dargestellte Abdeckung 30 ist in FIG 2 und FIG 3 gezeigt. Mittels der Abdeckung 30 ist der ansonsten nach Außen hin offene Kühlkanal 26 größtenteils verschlossen, abgesehen vom Einlass 32, durch den dem Kühlkanal 26 ein Kühlmittel, vorzugsweise Kühlluft, zugeführt werden kann. Der Einlass 32 ist am ausströmseitigen Ende 18 des Turbinenleitschaufelträgers 10 angeordnet.

Das durch den Einlass 32 zugeführte Kühlmittel strömt entlang des Kühlkanals 26 zum einströmseitigen Ende 16 hin, wo es dann, insbesondere nahe des Umlenkbereichs 34, den Turbinenleitschaufelträger 10 kühlt. Nachdem es den Umlenkbereich 34 durchströmt hat, strömt es in dem nachfolgenden Kühlkanalabschnitt zum ausströmseitigen Ende 18. Der sich an den Umlenkbereich 34 anschließende Abschnitt des Kühlkanals 26 ist dabei in FIG 2 dargestellt. Durch den am ausströmseitigen Ende 18 angeordneten Auslass 36 kann das Kühlmittel aus dem Kühlkanal 26 nach innen abgeführt werden. Zuvor wärmt jedoch das aufgeheizte Kühlmittel den hinteren Bereich des Turbinenleitschaufelträgers 10 auf, wodurch eine Angleichung der Materialtemperatur entlang der Axialrichtung erfolgt. Der Auslass 36 führt das Kühlmittel in den vom Turbinenleitschaufelträger 10 umgriffenen Innenraum 40, von wo aus es zur weiteren Kühlung von im hinteren Bereich des Turbinenleitschaufelträgers 10 befestigten Turbinenleitschaufeln eingesetzt werden kann. Anstelle dessen kann das Kühlmittel auch zur Sperrung von dort vorhandenen Spalten verwendet werden.

Während des Betriebs einer Gasturbine mit einem erfindungsgemäß ausgestalteten Turbinenleitschaufelträger 10 kann die im vorderen, d.h. einströmseitigen Ende 16 des Turbinenleitschaufelträgers 10 auftretende Wärmeenergie besondere effizient durch das in der Wand 20 strömende Kühlmittel abtransportiert werden, nachdem dieses durch den Einlass 32 dem Kühlkanal 26 zugeführt worden ist. Nach der Kühlung des einströmseitigen Endes 16 des Turbinenleitschaufelträgers 10 wird die Kühlluft über das ausströmseitige Ende 18 des Turbinenleitschaufelträgers in den Innenraum 40 geführt.

Insofern wird das Kühlmittel nicht wie bisher, auf kürzestem Weg radial von außen nach innen durch den Turbinenleitschaufelträger 10 geführt, sondern über eine Kühlschleife. Die mäanderförmige Kühlschleife führt das Kühlmittel aus dem kälteren Bereich des Turbinenleitschaufelträgers 10 - dem ausströmseitigen Ende 18 - zu einem wärmeren Bereich - dem einströmseitigen Ende 18 - und wieder zurück. Der hintere, ausströmseitige Bereich des Leitschaufelträgers wird erwärmt durch das bei der Kühlung des vorderen Bereichs des Leitschaufelträgers aufgeheizte Kühlmittel. In Axialrichtung gesehen kann somit eine Vergleichmäßigung der thermischen Belastung des Turbinenleitschaufelträgers 10 erreicht werden, wobei die thermische Spitzenbelastung insgesamt gesenkt wird. Dies ermöglicht die Verwendung eines vergleichsweise preiswerten Materials für den Turbinenleitschaufelträger 10 trotz einer weiteren Erhöhung der Umgebungstemperatur des Turbinenleitschaufelträgers 10 durch höhere Turbineneintrittstemperaturen.

Sofern es zweckmäßig oder erforderlich ist, kann die den Kühlkanal 26 radial innen begrenzende Wand 42 auch mit Turbulatoren 44 ausgestaltet sein, um den Wärmeübergang zu verbessern. Dies führt dann zu einer vergleichsweise effizienten Wärmeübertragung aus dem Turbinenleitschaufelträger 10 in das Kühlmittel und umgekehrt.

Zudem sind an der inneren Oberfläche 46 des Turbinenleitschaufelträgers 10 in Umfangsrichtung endlos verlaufenden Nuten 48 vorgesehen, in welchen Leitschaufeln unterschiedlicher Turbinenstufen eingeschoben und befestigt werden können. Diese Nuten 48 sind jedoch nur rein schematisch dargestellt.

Insgesamt betrifft die Erfindung einen Turbinenleitschaufelträger 10 für eine axial durchströmte Gasturbine umfassend eine rohrförmige Wand 20, mit einem einströmseitigen Ende 16 sowie einem ausströmseitigen Ende 18 für ein im Innenraum 40 des Turbinenleitschaufelträgers 10 in einem Strömungspfad der Gasturbine strömendes Heißgas, wobei in der Wand 20 zumindest ein Kühlkanal 26 für ein Kühlmittel vorgesehen ist, welcher sich jeweils von einem Kühlmittel-Einlass 32 zu einem Kühlmittel-Auslass 36 erstreckt. Um den Turbinenleitschaufelträger 10 für besonders hohe Einsatztemperaturen auszugestalten, wird vorgeschlagen, dass der Einlass 32 und der Auslass 36 jeweils am ausströmseitigen Ende 18 des Turbinenleitschaufelträgers 10 angeordnet sind, wobei der dem jeweiligen Einlass 32 und Auslass 36 zugeordnete Kühlkanal 26 sich bis zum einströmseitigen Ende 16 des Turbinenleitschaufelträgers 10 erstreckt und dort in einen Umlenkbereich 34 übergeht, von wo aus er sich weiter zum ausströmseitigen Ende 18 erstreckt.

## Patentansprüche

1. Turbinenleitschaufelträger (10) für eine Gasturbine, umfassend eine rohrförmige Wand (20),
mit einem einströmseitigen Ende (16) und einem dem einströmseitigen Ende (16) gegenüberliegenden ausströmseitigen Ende (18) für ein im Innenraum (40) des Turbinenleitschaufelträgers (10) in einem Strömungspfad der Gasturbine strömendes Heißgas,
wobei in der Wand (22) zumindest ein Kühlkanal (26) für ein Kühlmittel vorgesehen ist, welcher sich jeweils von einem Kühlmittel-Einlass (32) zu einem Kühlmittel-Auslass (36) erstreckt,
**dadurch kennzeichnet, dass** der den Einlass (32) mit dem Auslass (36) verbindende Kühlkanal (26) sich in Axialrichtung vom Einlass bis zu einem am einströmseitigen Ende (16) des Turbinenleitschaufelträgers (10) angeordneten Umlenkbereich (34) und von dort aus sich weiter zum Auslass (36) erstreckt.

2. Turbinenleitschaufelträger (10) nach Anspruch 1,
bei dem der Einlass (32) und der Auslass (36) jeweils am ausströmseitigen Ende (18) des Turbinenleitschaufelträgers (10) angeordnet sind.

3. Turbinenleitschaufelträger (10) nach Anspruch 1 oder 2,
bei dem entlang des Umfangs der Wand (20) verteilt eine Vielzahl von Kühlkanälen (26) vorgesehen ist.

4. Turbinenleitschaufelträger (10) nach Anspruch 1, 2 oder 3,
bei dem zumindest einer der Einlässe (32) an einer äußeren Oberfläche (22) der Wand (20) angeordnet ist.

5. Turbinenleitschaufelträger (10) nach einem der vorangehenden Ansprüche,
bei dem zumindest einer der Auslässe (36) an einer inneren Oberfläche (46) der Wand (20) angeordnet ist.

6. Turbinenleitschaufelträger (10) nach einem der vorangehenden Ansprüche,
bei dem an zumindest einer Kühlkanalwand (42) Turbulatoren (44) angeordnet sind.

7. Turbinenleitschaufelträger (10) nach einem der vorangehenden Ansprüche,
bei dem in einer äußeren Oberfläche (22) der Wand (20) für jeden Kühlkanal (26) eine Nut vorgesehen ist,
welche zur Bildung des betreffenden Kühlkanals (26) durch eine Abdeckung (30) größtenteils verschlossen ist.

8. Turbinenleitschaufelträger (10) nach einem der vorangehenden Ansprüche,
welcher konisch ausgebildet und
aus zwei halbrohrartigen Leitschaufelträgerelementen (12), (14) gebildet ist,
welche flanschartig miteinander verbunden sind.

9. Turbinenleitschaufelträger (10) mit in seiner inneren
Oberfläche (46) angeordneten endlosen Nuten (48) zur Befestigung von in einem Kranz angeordneten Leitschaufeln einer Turbine.

10. Gasturbine mit einem Druckmantel,
in dem ein Turbinenleitschaufelträger (10) nach einem der Ansprüche 1 bis 9 angeordnet ist.
